# EUROPEAN PATENT APPLICATION

(11) **EP 2 899 061 A1**
(43) Date of publication of application: **29.07.2015**
(21) Application number: 14152869.5
(22) Date of filing: 28.01.2014
(51) Int. Cl.: B60N 2/00, B60R 22/48, B60R 22/18

(54) **Seat belt detection device for detecting the buckled state for a driver seat**

(71) Applicant: Ford Otomotiv Sanayi Anonim Sirketi, 34885 Sancaktepe/Istanbul (TR)
(72) Inventor: Yilmaz, Zuhal Hacioglu, Gölcük - Kocaeli (TR); Yilmaz, Selçuk Kubilay, PK: 41650 Gölcück Kocaeli (TR); Kaya, Tuna, Söke-Aydin (TR); Ates, Inanç Samet, Karacabey Bursa (TR)
(74) Representative: Illing, Rolf

(57) **Abstract**

The present invention relates to a seat belt detection device for detecting a buckled seat belt (6) of a vehicle (2) comprising a locking detection sensor for detecting a locking state of a seat belt buckle (3) and a weight sensor (15) for detecting an occupied state of a seat (9) and an additional web guide detection sensor (4) which detects a rotary movement of a seat belt web guide (5).

## Description

The present invention relates to an improved seat belt detection device for detecting a buckled seat belt of a vehicle according to the preamble of claim 1.

It is well accepted that an occupant of a moving vehicle may be protected against serious bodily injury when the vehicle is involved in a collision if he is secured in his seat by means of a seat belt. Yet, many individuals continue to travel with their seat belts unbuckled.

Therefore, seat belt detection devices have been developed for vehicles which are capable of determining a state of the seat belt that indicates whether an occupant of the vehicle has buckled the seat belt or not. This seat belt state is generally relayed to another device, for example, a seat belt warning system producing an audible and/or visual alarm that requests the occupant to buckle his seat belt or an airbag control apparatus for controlling occupant protection devices, such as, airbags or seat belt pretensioners. Commonly, by means of a "locking detection sensor" such known "seat belt detection devices" monitor a locking state of a seat belt buckle into which a seat belt tongue is inserted that is slidably mounted on the seat belt strap.

In order to improve and extend those seat belt detection devices, it is further common to incorporate a "weight sensor" into a passenger seat of the vehicle to detect whether the respective seat is occupied by a passenger of the vehicle or not. It is then possible for the seat belt detection device to only monitor the locking state of the seat belt buckle of those seats that are actually occupied by a passenger, while the vehicle is moving. Thus, the monitoring of the buckled seat belt state can be extended, for example, to the co-driver's seat or to the back seats of the vehicle which might not be occupied by a passenger other than the driver's seat which is always occupied by the driver of the vehicle.

A common problem with the above-described detection devices is the ease with which they can be overridden by the vehicle occupant. For example, the occupant may insert the seat belt tongue into the buckle and place the seat belt strap between him and the seat so as to sit on the seat belt strap or he may pass the seat belt strap behind the back of the seat and insert the tongue into the buckle. Moreover, inserting a beltless tongue into the buckle is yet another possibility to override such seat belt detection devices. Hence, a correct and intended buckling of the seat belt, i.e. a buckling according to regulations, such that the seat belt strap is wound around the occupant to effectively protect him in case of a collision cannot be assured by the seat belt detection devices known from the prior art.

It is therefore an object of the present invention to overcome the above-described deficiencies of the prior art seat belt detection devices and provide an improved seat belt detection device which is able to reliably detect a correctly and intendedly buckled seat belt.

It is to be understood that the features disclosed in the following detailed description may be combined in any technically reasonable and practical way and disclose further embodiments of the present invention.

The above-mentioned object and other objects, as set forth in greater detail below, are accomplished in accordance with the teachings of the present invention by providing a seat belt detection device for detecting a buckled seat belt of a vehicle comprising a locking detection sensor for detecting a locking state of a seat belt buckle, a weight sensor for detecting an occupied state of a seat, a vehicle speed sensor to detect vehicle movement and an additional web guide detection sensor which detects a rotary movement of a seat belt web guide (herein also referred to as a D-ring).

The present invention provides a seat belt detection device which is able to reliably detect a correctly buckled seat belt, i.e. a seat belt which, when buckled, winds around an occupant who is seated in a vehicle, firstly, by determining whether a seat is occupied by a passenger, secondly, by determining whether a seat belt tongue is inserted into the seat belt buckle, i.e. the seat belt buckle is locked, and, thirdly, by double-checking this locking state of the seat belt buckle with a monitoring of the rotary movement of the seat belt web guide (or D-ring).

The locking detection sensor registers the locking of the seat belt tongue in the seat belt buckle. The locking state of the seat belt buckle can take the form of a locked state or an unlocked state of the seat belt buckle. A locked seat belt buckle means that a seat belt tongue which is slidably mounted on the seat belt strap is inserted and locked in the seat belt buckle. An unlocked seat belt buckle means that the seat belt tongue is not inserted in the seat belt buckle. From this unlocked state it can be concluded that the occupant is not intendedly buckled with the seat belt.

On the other hand, from a locked seat belt buckle it cannot necessarily be inferred that the occupant is intendedly buckled with the seat belt and is thus effectively protected in the case of a collision. For example, the occupant may insert the seat belt tongue into the buckle and place the seat belt strap between him and the seat so as to sit on the seat belt strap or he may pass the seat belt strap behind the back of the seat and insert the tongue into the buckle. In these cases the seat belt strap is not wound around the occupant's body. Hence, the seat belt cannot protect the occupant as intended. Although the locking detection sensor detects a locked state of the seat belt buckle the occupant is not intendedly buckled. The same applies when the occupant inserts a beltless tongue into the seat belt buckle.

The above-described bypassing possibilities of the seat belt detection device can be effectively prevented according to the present invention by the additional monitoring of the rotary movement of the seat belt web guide (or D-ring) via the web guide detection sensor. The seat belt strap is usually slidably held and guided by the seat belt web guide which in turn is pivotably secured to the vehicle body. For example, as to the front seats of the vehicle the seat belt web guide is pivotably mounted on the B-pillar of the vehicle body and as to the back seats of the vehicle the seat belt web guide is pivotably mounted on the C-pillar of the vehicle body.

Now, when the seat belt is intendedly buckled, i.e. the seat belt strap is wound around the occupant's body, the seat belt web guide will generally rotate about its pivot point (fastener to the vehicle body) toward the front of the vehicle. Contrary to this, the seat belt web guide will not rotate considerably in the above-described bypassing cases. Consequently, a correctly and intendedly buckled seat belt can be effectively detected by the seat belt detection device according to the present invention.

According to a preferred embodiment of the present invention a buckled seat belt state of an occupant is only determined by the seat belt detection device when both the locking detection sensor detects a locked seat belt buckle and the web guide detection sensor detects a rotary movement that is greater than or equal to a minimum rotary movement. The buckled seat belt state indicates whether the occupant is correctly and intendedly buckled with the seat belt, i.e. the seat belt strap is wound around the occupant's body (positive state), or not (negative state). A necessary but not sufficient condition to determine a correctly buckled occupant is the positive detection of a locked seat belt buckle. In order to output a positive buckled seat belt state, i.e. the seat belt strap is wound around the occupant, it is further necessary to detect a certain rotary movement of the seat belt web guide from which it can be inferred that the occupant is intendedly buckled. This rotary movement is defined as the minimum rotary movement according to the present invention.

According to another preferred embodiment of the present invention, the minimum rotary movement of the seat belt web guide is greater than the rotary movement in the case in which the seat belt buckle is locked without the seat belt strap being wound around the occupant. This rotary movement depends on the specific geometrical situation of the installation of the seat belt inside the vehicle, e.g. installation on front seats or back seats or the position of the respective seats relative to the fastener (pivot point) of the seat belt web guide. From the given geometrical situation a certain rotary movement, if any, of the seat belt web guide can be defined for the non-use of the seat belt and for the non-intended use of the seat belt at which the seat belt is not wound around the occupant's body. Thus, the minimum rotary movement of the seat belt web guide is to be defined which is greater than the aforementioned rotary movements to infer a correctly buckled occupant. A positive detection of a rotary movement which is equal or greater than the minimum rotary movement of the seat belt web guide results in the output of a positive buckled seat belt state by the seat belt detection device.

According to yet another preferred embodiment of the present invention the seat belt detection device further comprises a vehicle speed sensor for detecting a travelling speed of the vehicle, wherein a buckled seat belt state of an occupant is only determined when the vehicle speed sensor detects a travelling speed of the vehicle, the weight sensor detects the occupation of seats by passengers, the locking detection sensor detects a locked seat belt buckle and the web guide detection sensor detects a rotary movement that is greater than or equal to a minimum rotary movement. According to this embodiment the determination of the buckled seat belt state is advantageously restricted to the case in which an actual travelling movement of the vehicle occurs.

By way of example, the seat belt detection device can be implemented as an electronic control unit to which the locking detection sensor, the web guide detection sensor, the weight sensor and the vehicle speed sensor are electrically connected. The electronic control unit may be a separate control unit or may be incorporated in another control unit. The output of the buckled seat belt state (visually or audibly) may be effected, for example, by a display that is electrically connected to the electronic control unit or by a signal that is output from the seat belt detection device.

Further objects and advantages of the present invention will become more apparent from the following detailed description of a preferred embodiment shown in the accompanying drawings. This description should not be considered limiting in any way. With reference to the accompanying drawings, like elements are numbered alike:
- FIG. 1: is a perspective view of a seat belt system for a vehicle including a seat belt detection device according to an embodiment of the present invention;
- FIG. 2: is an enlarged perspective view of the seat belt system of FIG. 1;
- FIG. 3: is an enlarged view showing a web guide of the seat belt system of FIG. 1;
- FIG. 4: shows the web guide of FIG. 3 in two different operating positions; and
- FIG. 5: is a perspective sectional view of a B-pillar on which the web guide of FIG. 3 is mounted.

A detailed description of an embodiment of the disclosed apparatus is presented herein by way of exemplification and not limitation with reference to the figures.

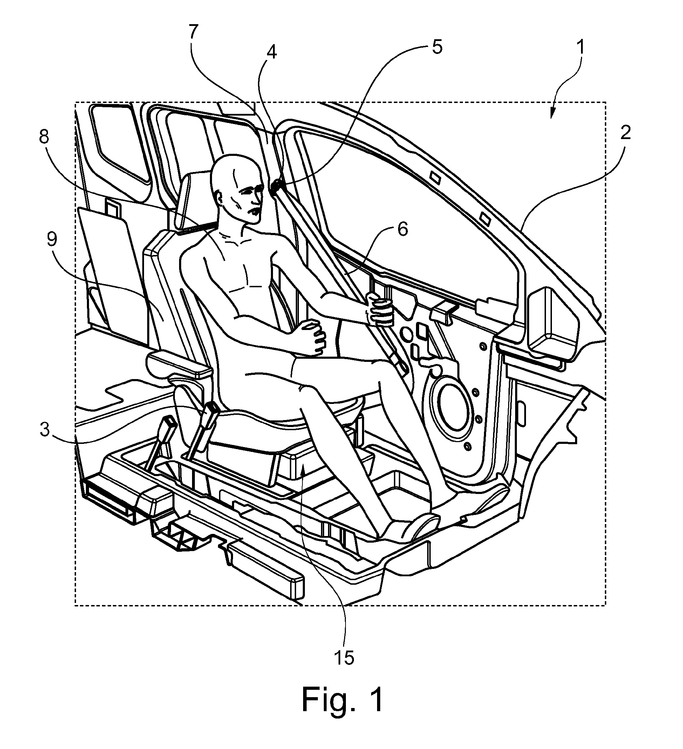

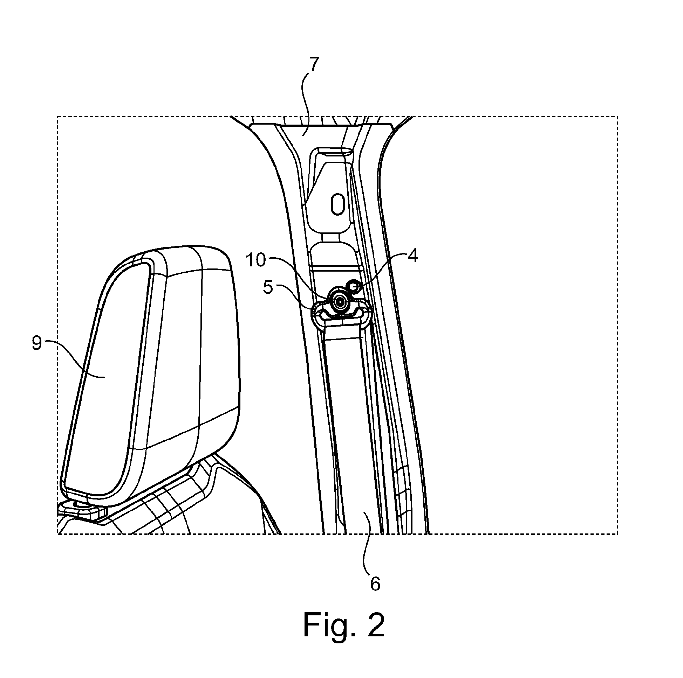

FIG. 1 shows a perspective view of a seat belt system 1 for a vehicle 2 which is only partly shown in FIG. 1 including a seat belt detection device according to a preferred embodiment of the present invention. The seat belt detection device of this embodiment includes a locking detection sensor (not shown) for detecting a locking state of a seat belt buckle 3, a vehicle speed sensor for detecting a travelling speed of the vehicle 2, a weight sensor 15 for detecting an occupied state of a seat 9, and an additional web guide detection sensor 4 (shown in greater detail in FIGS. 2-5) which detects a rotary movement of a seat belt web guide 5 (or D-ring). As shown in FIG. 1, the seat belt web guide 5 guides a seat belt 6 or seat belt strap 6. The seat belt web guide 5 of the depicted seat belt system is pivotably mounted on a B-pillar 7 of the vehicle 2. Thus, the seat belt 6 shown in FIG. 1 can be used by a passenger 8 being seated on the front seat 9 of the vehicle 2.

Furthermore, the seat belt detection device according to the preferred embodiment depicted in FIG. 1 is implemented as an electronic control unit to which the locking detection sensor, the vehicle speed sensor, the weight sensor 15, and the web guide detection sensor 4 are electrically coupled.

When the vehicle 2 starts moving, the vehicle speed sensor starts sending signals to the electronic control unit which initiate the electronic control unit to evaluate the signals from the other sensors. The electronic control unit then regularly examines the signals coming from the individual sensors. If the weight sensor 15 sends signals which represent the presence of a passenger in the respective seat 9 of the vehicle 2 the electronic control unit starts examining the signals coming from the locking detection sensor. Then, if the locking detection sensor for detecting a locking state of the seat belt buckle 3 does not detect a seat belt tongue which is generally slidably mounted on the seat belt strap 6 being inserted into the seat belt buckle 3 (locked state), i.e. the locking detection sensor does not send signals to the electronic control unit, the electronic control unit alerts the occupant 8 by outputting an audible and/or visual warning signal. If the seat belt tongue is inserted in the seat belt buckle 3, i.e. the seat belt buckle 3 is locked and the locking detection sensor sends signals to the electronic control unit, the electronic control unit does not alert the occupant 8. Instead it starts examining the signals coming from the web guide detection sensor 4.

If the web guide detection sensor 4 does not detect a rotary movement of the seat belt web guide 5 or just only a rotary movement that is smaller than a certain minimum rotary movement, i.e. the web guide detection sensor 4 does not send signals to the electronic control unit, the electronic control unit alerts the occupant 8 by outputting an audible and/or visual warning signal. According to the depicted embodiment of FIG. 1 the minimum rotary movement of the web guide 5 is greater than the rotary movement in the case in which the seat belt buckle 3 is locked without the seat belt strap 6 being wound around the occupant 8. If the web guide detection sensor 4 detects a rotary movement that is greater than or equal to the minimum rotary movement the web guide detection sensor 4 begins sending signals to the electronic control unit which in turn does not alert the occupant 8.

In other words, when all sensors, i.e. the locking detection sensor, the vehicle speed sensor, the weight sensor 15, and the web guide detection sensor 4, send signals to the electronic control unit it does not alert the occupant 8. In all the cases in which the locking detection sensor and/or the web guide detection sensor 4 do not send signals and both the vehicle speed sensor and the weight sensor 15 send signals an audible and/or visual warning is output to the occupant 8 until he correctly buckles the seat belt 6.

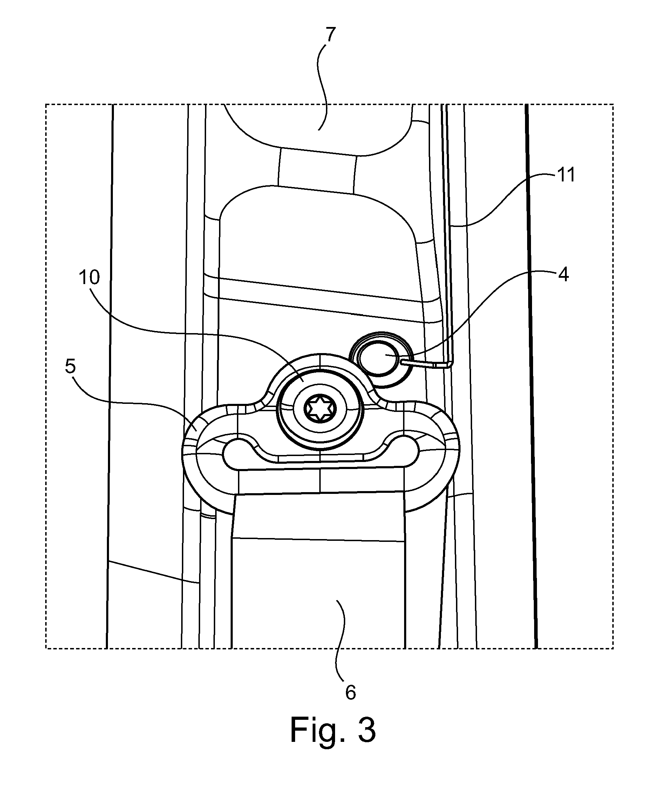

FIGS. 2 and 3 show enlarged perspective views of the seat belt system of FIG. 1. In particular, the web guide detection sensor 4 and the seat belt web guide 5 (or D-ring) guiding the seat belt strap 6 are shown in greater detail. As can be seen in FIGS. 2 and 3, the web guide 5 is pivotably secured to the B-pillar 7 of the vehicle via a fastener 10. The web guide detection sensor 4 is electrically connected to the electronic control unit via a cable 11.

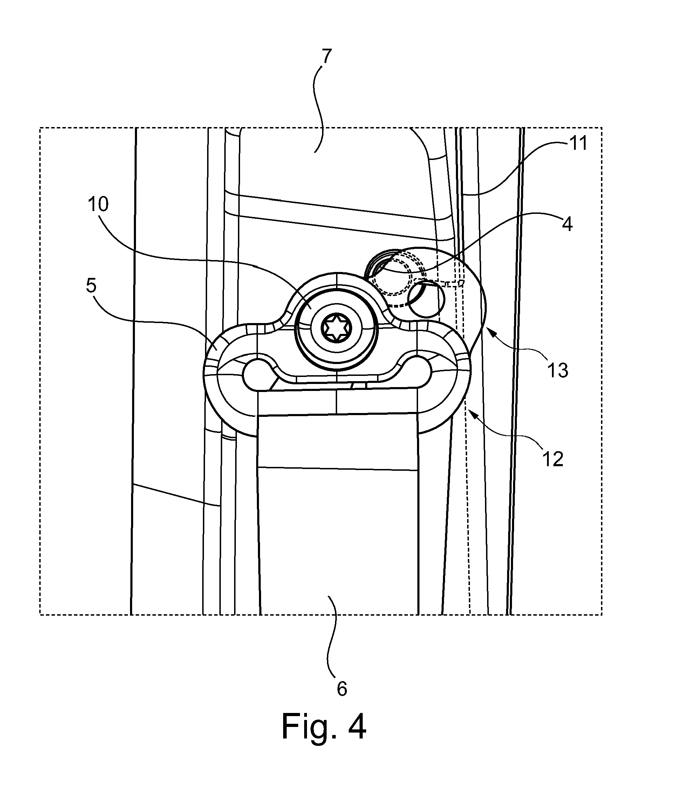

FIG. 4 shows the seat belt web guide 5 of FIG. 3 in two different operating positions 12 and 13. In the first position 12 the seat belt 6 is not in use. Thus, the web guide detection sensor 4 does not detect a rotary movement of the seat belt web guide 5 that is greater than or equal to a minimum rotary movement whose direction, according to the preferred embodiment depicted in FIG. 4, is toward the front of the vehicle 2. After having rotated at least this minimum rotary movement toward the front of the vehicle 2 the seat belt web guide 5 takes the second position 13 shown in FIG. 4. In this position 13 at least a part of the seat belt web guide 5 has rotated in front of the web guide detection sensor 4 such that the web guide detection sensor 4 detects a rotary movement that is greater than or equal to the minimum rotary movement of the seat belt web guide 5. From the rotary movement of the web guide 5 depicted in position 13 it can be inferred that the seat belt 6 is correctly and intendedly buckled, i.e. the seat belt strap 6 is wound around the occupant's body, so that the seat belt 6 is able to protect the occupant 8 in case of a collision.

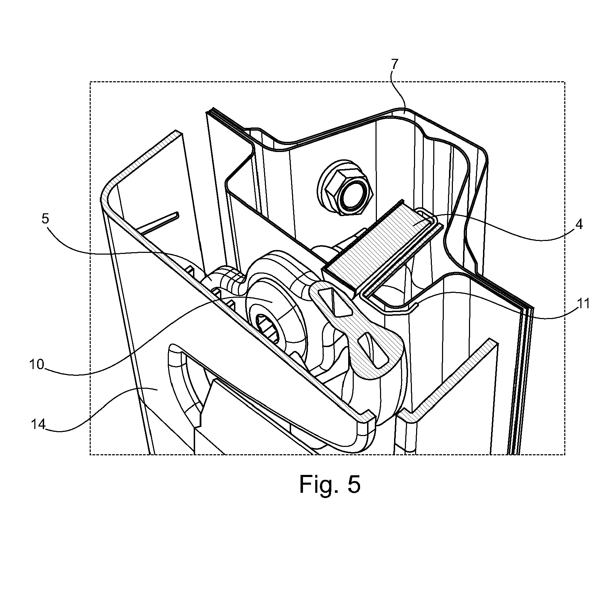

FIG. 5 is a perspective sectional view of the B-pillar 7 on which the seat belt web guide 5 of FIG. 3 is mounted. As can be seen, the web guide detection sensor 4 is advantageously placed inside the B-pillar 7 of the vehicle 2 and the cable 11 is advantageously covered with a part of the interior trim 14.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the claims.

### List of reference numerals:

- 1: Seat belt system
- 2: Vehicle
- 3: Seat belt buckle
- 4: Web guide detection sensor
- 5: Seat belt web guide
- 6: Seat belt, seat belt strap
- 7: B-pillar
- 8: Occupant
- 9: Front seat
- 10: Fastener
- 11: Cable
- 12: First operating position
- 13: Second operating position
- 14: Interior trim
- 15: Weight sensor

## Claims

1. A seat belt detection device for detecting a buckled seat belt (6) of a vehicle (2) comprising a locking detection sensor for detecting a locking state of a seat belt buckle (3) and a weight sensor (15) for detecting an occupied state of a seat (9),
**characterized by**
an additional web guide detection sensor (4) which detects a rotary movement of a seat belt web guide (5).

2. The detection device according to claim 1, wherein a buckled seat belt state of an occupant (8) is only determined when the locking detection sensor detects a locked seat belt buckle (3) and the weight sensor (15) detects an occupied seat (9) and the web guide detection sensor (4) detects a rotary movement that is greater than or equal to a minimum rotary movement.

3. The detection device according to claim 1, further comprising a vehicle speed sensor for detecting a travelling speed of the vehicle (2), wherein a buckled seat belt state of an occupant (8) is only determined when the vehicle speed sensor detects a travelling speed of the vehicle (2) and the locking detection sensor detects a locked seat belt buckle (3) and the weight sensor (15) detects an occupied seat (9) and the web guide detection sensor (4) detects a rotary movement that is greater than or equal to a minimum rotary movement.

4. The detection device according to claim 2 or 3, wherein the minimum rotary movement is greater than the rotary movement in the case in which the seat belt buckle (3) is locked without the seat belt strap (6) being wound around the occupant (2).
